# EUROPEAN PATENT APPLICATION

(11) **EP 2 770 663 A1**
(43) Date of publication of application: **27.08.2014**
(21) Application number: 13000881.6
(22) Date of filing: 21.02.2013
(51) Int. Cl.: H04L 9/32, G06Q 30/00

(54) **Encryption Key-Based Product Authentication System and Method**

(71) Applicant: Pawlukiewicz, Michal, 26-130 Suchedniów (PL); Janus, Pawel, 30-427 Kraków (PL); Stolarz, Wojciech, 31-532 Kraków (PL)
(72) Inventor: Pawlukiewicz, Michal, 26-130 Suchedniów (PL); Janus, Pawel, 30-427 Kraków (PL); Stolarz, Wojciech, 31-532 Kraków (PL)
(74) Representative: Radlowski, Jakub

(57) **Abstract**

Encryption key-based product authentication system and method of authentication products, that contains a controller chip placed in a product, a reader, a verification server, and an encryption key wherein the controller chip **(2)** has a product identifier **(3)** recorded therein as well as an encryption key **(4)** to generate a resulting code **(dh₁)** with the use of control information **(dₖ)** and a verification server **(5)** with a base of products identifiers **(3n)** and with control encryption keys **(4')** assigned to the products identifiers **(3ₙ)** to generate a control code **(dh₂)** with the use of control information **(dₖ),** where the verification server **(5)** is connected through a remote connection to a communication server **(1),** and the communication server **(1)** is connected via a local connection to the reader **(6),** and the reader **(6)** is connected via a local connection to the controller chip **(2),** and the authentication is performed by comparing the compatibility between two codes: the resulting code **(dh₁)** and the control code **(dh₂).**

## Description

The subject of the Invention is a product authentication system using an encryption key and a method for authenticating products with the use of encryption key.

A method for authenticating an RFID (Radio Frequency Identification) tag containing product data is known from the description of a European Patent No. EP2076799 entitled "Authenticated radio frequency identification and key distribution system thereof'. A solution as provided in this EU Patent represents a method described as follows: *"a method for signing an RFID tag comprising the obtaining of the first set* of *data to be written to said tag, the said first set of data having information therein intended to be hidden from unauthorized RFID readers; Incorporating the said first set of data into a signature scheme with message recovery* as a *recoverable portion, and writing a signature to the said tag using a private key having a corresponding verification key, wherein the said first set of data can only be recovered by an authorized RFID reader having access to the said verification key"* (Patent Claim No. 16 according to the Patent Description). Under the above described solution, the first set of data can be a product identifier. Additionally, the Invention under the above Patent is provided with the option- that the controlling access to the said verification key is distributing the said verification key to a selected one or more authorized RFID reader. In the above solution, there is also a description saying that *"an RFID signing station comprising an RFID reader for reading RFID tags, and a cryptographic module for writing signatures to said RFID tags, and the said cryptographic module being configured for obtaining a first set of data to be written to the said tag; the said first set of data having information therein intended to be hidden from unauthorized RFID readers, incorporating said first set of data into a signature scheme with message recovery as* a *recoverable portion, and writing a signature to the said tag using a private key having a corresponding verification key, wherein the said first set of data can only be recovered by an authorized RFID reader having access to the said verification key".* The first set of data can be a product identifier. Moreover, there is disclosed a specific version of the said invention, where: *"an RFID reader comprises a cryptographic module for verifying EC cryptographic signatures on the RFID tag and the said cryptographic module being configured for obtaining the said tag, the said tag having thereon a signature with at least one component encrypting the first set of data therein, and having a second set of data, the said second set of data being plaintext, obtaining a verification key decrypting, at least, the said component using the said verification key to obtain the said first set of data, and examining the said first set of data for* a *predetermined characteristic to verify the said signature and, thereby, to authenticate the said tag".* Such an RFID reader can be a product identifier. The both options can use components that are generated by hashing a combination of a respective signature component and a second portion of data.

There is also a Patent No. WO2011AU01231 entitled "System, method and computer software code for authentication of an item". The solution under this Patent comprises a method and a system to authenticate products on the basis of data contained in external databases. The system under this solution includes a plurality of databases with information stored therein that is associated with authentic items available for purchase and with a user interface module operable by a customer and configured to receive indicia from a customer who views an item available for purchase. The indicia are disposed on, or associated with the item and a control module in communication with the user interface module is configured to receive indicia and either to retrieve data from the plurality of databases containing stored information relating to the item, or to provide a response indicating the failure to locate stored information corresponding with the supplied indicia, and to provide either the failure indication or the retrieved data to the user interface module for presentation.

There is another Invention entitled "System and method for authenticating RFID tags" under the Patent No. EP2425281; this Invention represents a system and a method for providing authenticity to a radio frequency identification (RFID) tag. The method comprises the generating of a plurality of digital signatures, wherein every digital signature is generated using an index value unique to that digital signature and using information associated with the RFID tag; and the storing of the plurality of digital signatures on the RFID tag in association with respective index values to enable a desired digital signature to be selected according to the provided index value. The system and method for enabling an RFID reader to authenticate an RFID tag, which utilizes a challenge comprising an index value to request one of the stored signatures and authenticating the same. The RFID tag is configured so as to participate in the challenge-response protocol.

Another solution is known from a Patent No. Z KR101026647; this solution provides that a communication security system connects a user terminal and an operation management server by using a wired/wireless communication network. The user terminal and the operation management server have a master sharing key that is a security value. The master sharing key is applied to a key conduction password algorism. The user terminal and the operation management server enforce communication security according to coincidence of each generated traffic protection safety key. The operation server determines a production number about production of a random variable and a traffic protection stability key.

Some other recognized state-of-the-art solutions make it possible to use encryption keys in various configurations for the purpose of protecting and securing data being transmitted or verified, whereas this particular solution, unlike the above mentioned ones, provides a functional inversion of the roles, i.e. the encryption key is being verified with the use of data. And the data alone are a random and discretionary sequence of encryptable bytes and their function is only a function of the key verification tool. As regards the essence of the Invention covered by this Patent Application, each and every reference to "data", "code", "key", etc. shall be interpreted as a particular and idiosyncratic physical state of carrier, e.g. magnetization state, value of potential difference, direction of magnetic or electric domain alignment, etc. Thus, every "datum" expressly represents one specific physical state. However, in order to acquire or to record the same 'data', different kinds of physical states (as exemplified above) may be utilized; therefore, in the description as well as in the Patent Claims hereinafter, generalized terms of "data" ("code", "key", etc.) will be used, and they always refer to given specific physical states of the selected carriers, From the point of view of the essence of the present Invention, it is irrelevant whether or not a physical state exists, for example, on the magnetic or on electronic carrier, since they are mutually transformable one onto the other; thus, that type of transformation is unambiguous and unmistakeably assigns the physical state of a carrier to the "data". Then, with regard to the 'connections' and 'transmission' terms: they denote a physical process of transmitting the physical state of one carrier onto another carrier. So, the essence of the solution under this Patent Application consists in comparing the particular forms of how the bytes are written down, as well as in verifying their compatibility. The compatibility or incompability of the written down form of bytes denotes a certain result of the authentication test. The option, as presented in one of the preferable variants of the Invention under discussion, to acquire another type of product data than the authentication result, is nothing but a derivative possibility in the context of the essence of the invention.

According to the Invention, the product authentication system using an encryption key consists of the following elements: controller chip placed within the product, reader, encryption key, verification server, and communication server where the controller chip is connected to the reader (wired/wireless) using a local connection, and the reader is linked to the verification server using a remote' connection through the communication server.

Controller chip is an electronic microcircuit that enables the digital processing of data including two-way communication, writing down and reading functions, performing operations, and securing. At the same time, the controller chip is a carrier of the protected data and it can perform operations on those data. In the controller chip, the predetermined data are recorded, and, as a minimum, those data contain a unique product identifier and an encryption key. The controller chip is capable of encrypting control information with the use of an encryption key, as well as of applying a hash function to an encrypted control information.

Reader is a device allowing for the verification of the electronic mark; this device enables a two-way communication (wired/wireless) and a remote communication. It is also equipped with a user's interface to provide a communication with the user. The reader provides local communication with the controller chip and a remote communication with the communication server. The reader makes it possible to link up the communication between the chip and the computer network. Also, the reader contains a configuration module of the reader's operational parameters.

Communication server is a computer with an access to a computer network; with this communication server, a connection can be established between the reader on one side and the verification server on the other side. The communication server is remotely linked to the reader, whereas its connection to the verification server is either a remote or a local connection. The communication server is the centre of the entire system. The communication server may contain, simultaneously, a base with products identifiers, a database of readers, which are authorized to initiate a test, and a database of verification servers; in the latter variant, the communication server is a hub to activate a remote connection to a verification server that is appropriate for a particular product identifier.

Verification server is a computer that makes it possible to provide a connection to the communication server. The verification serve encompasses a database of product identifiers and a database of control encryption keys; every product identifier has a control encryption key assigned to it. With the verification server, it is possible to generate control information, encrypt this information using a control encryption key, and to apply a hash function in order to encrypt the control information.

Data encryption consists in performing mathematical-logical operations with the use of symmetric cipher, i.e. with the use of a single identical encryption key. In the Invention acc. to this Patent Application, the typical situation has been reversed i.e, the usual situation, where the encryption key typically matches the symmetric decryption key that is applied to read encrypted data. According to the Invention under discussion, these are data, which serve the purpose of acquiring information referring to the encryption key. The active state of the activated encryption key-based system for product authentication is as follows: a local connection is established between the controller chip and the reader, whereas remote connections are initiated between the reader and the communication server, and between the communication server and the verification server.

The reader initiates the connections for the purpose of acquiring a product identifier from the controller chip. When in the active state, the verification server uses active connections through the communication server and, based on the product identifier received from the reader, generates control information. The control information is a randomized sequence of data that may be encrypted using the encryption key. Through those initiated connections, the control information is transferred to the controller chip that generates a resulting code (i.e. the encrypted control information) using the encryption key encoded to the controller chip. With the use of the control encryption key, the verification server generates a control code that is the encrypted information. The verification server utilizes a database of products identifiers and control encryption keys assigned to each product identifier; every control encryption key is identical with its matching encryption key that is encoded to the controller chip placed in the product holding a definite product identifier. Under the system as presented herein, the authentication procedure is carried out on the basis of the comparison performed by the verification server that compares the resulting code with the control code; the resulting code is acquired with the help of the initiated connections through the communication server as a result of the encryption operation performed by the chip, whereas the control code is generated by the verification server that uses the control encryption key assigned to a given product identifier. The unconditional, absolute identity between the resulting code and the control code means that the result of the authentication procedure is positive. Failure to obtain an unconditional, absolute identity between the two codes or failure to obtain any resulting code means that the authentication result is negative. It is possible to read the authentication result using the reader through the remote connection with the communication and the verification servers; the latter one performs the authentication procedure.

The preferable variant of the Invention solution provides that the chip, based on the resulting code, and with the use of the hash function, generates a hashed resulting code, and, at the same time, the verification server, on the basis of the control code and with the use of the hash function, generates a hashed control code. A suitable hash function constitutes a one-way transformation of bytes of any variable length to a different sequence of bytes of a predetermined, fixed length. Two characteristic features of the hash function are: its collision resistance; owing to this feature it is impossible to generate two information having the same hash value; and its one-wayness, i.e. from the hash value no conclusion can be drawn on the entry information. The resulting hash value obtained using the hash function could be compared with the checksum included in the recorded bank account number: this checksum is clearly assigned to the bank account number; however, it is impossible to decipher the bank account number from the checksum. By applying the hash function to the resulting code and to the control code, the system security is definitely improved and the possibility is excluded that the encryption key could be reproduced on the basis of the hashed resulting code that is sent through the remote connection via the communication server to the verification server. The above transformation makes it possible to decrease the computer performance that is indispensable to perform a test since the size of the hashed data (transformed using the hash function) is much smaller than the size of the non-hashed encrypted data. In this way, the time needed to perform the test is minimized.

The preferable variant of the Invention solution provides that the communication server contains a database of readers including the determined types of permissions of the readers involved; therefore, the communication server established an active connection to only one verification server that is appropriate for a given reader. The communication server determines the scope of data of a given product that are, along with authentication result, to be passed on to the reader depending on the permissions the data receiving reader has been granted. Owing to this fact, some readers can get more product data than the amount of data resulting from the authentication result.

Another preferable variant of the Invention solution provides that one product identifier and several encryption keys are recorded in the chip. The authentication process can run on two different verification servers independently and more than one database can be utilized in the situation where one definite encryption key is assigned to one given product identifier, and it is not necessary to share the control encryption key with several users. In this variant, various users are authorized to perform the authentication, and every user performs the authentication procedure using its own control encryption key and its matching encryption key encoded in the chip.

Moreover, the system under discussion provides the use of only one key for several verification servers. The authentication process can run on diverse verifications servers (every verification server generates its own control data) and the results of their tests are independent of each other. Therefore, in this particular variant, the verification servers participating in the process must reciprocally authorize this operation

The method for authenticating products according to this Invention, based on a system comprising a controller chip placed in the product, a reader, a communication server, and a verification server, is characterized by that a local connection (wired/wireless) is established, via the reader, with a controller chip placed in the product, and information on the product identifier are acquired; next, with the use of the reader, a remote connection via the communication server is set up to the communication server for the purpose of sending a request for authentication along with the identifier of a product that has to be authenticated. Based on the data of the product identifier recorded in the database on the verification server, a control encryption key, assigned to the product identifier, is identified. Next, with the use of the verification server, the control information is generated; this control information has a form of any sequence of encryptable data. The control information is sent from the verification server to the reader via the communication server, and, next, with the use of the reader, this information is sent to the controller chip through the local connection. The controller chip encrypts the control information received using the coded encryption key and it generates a resulting code. The resulting code is then sent to the reader via the local connection, and the reader sends the resulting code to the verification server through the remote connection via the communication server. Simultaneously, the information is encrypted on the verification server using the control encryption key that has been identified as a key assigned to a given product identifier. This encrypted information constitutes a control code. Next, the product is verified by the verification server by way of comparing the control code generated with the resulting code acquired from the reader via the communication server. In the case, the two codes being compared prove to be identical, the authentication result is considered positive. Otherwise, the authentication result is considered negative. The authentication result obtained is sent from the verification server to the reader via the communication server to be read on the reader.

In the next preferable variant of the solution according to the Invention under discussion, as soon as the resulting code has been generated with the use of the controller chip, this resulting code is transformed into a hashed resulting code by means of the hash function, and, simultaneously, using the verification server, the control code is transformed, also with the use of the hash function, into a hashed control code. The authentication is performed by comparing the hashed resulting code with the hashed control code.

In one of the subsequent preferable variants of the solution according to the Invention, the communication and verification servers are also used; the communication server contains a database of product identifiers, and the verification servers in use are appropriate for the individual product identifiers. In this variant, the first action to be done is to identify the verification server whether or not it is appropriate for the authentication of a product bearing a specific product identifier; next, the authentication request is sent to this appropriate verification server.

Another preferable variant of the solution provides that the product identifier is a public identifier available externally to everybody who has contact with the product. However, the encryption key encoded in the controller chip's repository remains unavailable to the public. In this variant, regardless of the chip, the carrier with the information about the product identifier can be, for example: a barcode, a QR code, or any other external marking on the product.

Another possible variant of the solution according to the Invention includes the diversification of verification servers that are authorized to authenticate the same product. In this variant, the readers can be configured so as to have different ranges of access. With the use of the communication server, the received request for authentication is, at first, classified in terms of the range of access to the reader; next, the request is sent to one or more verification servers for authentication and for getting additional data on the product. In this variant, in the database recorded, at least, on one verification server, irrespective of the control encryption key, the product data are assigned to the product identifier. The respective product data may refer, for example, to the product's shelf life, taxies/duties paid, product's country of origin, product type, or they may be any other useful product information. In the case of the positive authentication result obtained from the verification server, the product data and this positive authentication result are sent together to the reader through the remote connection via the communication server. Next, the data sent are read using the reader.

The solution according to this Invention makes it possible to practically eliminate any attempt to fake products by means of counterfeiting original features, samples, and distinguishing signs/designs (trademarks). The uniqueness (singularity) of both the encryption keys and the control encryption keys assigned to every individual product identifier eliminates the possibility that the original, unique features of a product are multiplied, even in the situation when some unauthorized users obtain access to information pertaining to one specific encryption key encoded in one chip. At the same time, in such a chip, no information is recorded that could permit the identification of the product's country of origin or of its features. This would be possible only with the use of the verification server that is available to the manufacturer of the product or to any other authorized user. The essential advantage of the solution according to this Invention is that it is possible to dynamically change the product data. For example, in the case when a specific batch of products has been stolen, it is possible to characteristically mark the identifiers of those stolen products on the verification server. In the future, any request, whenever and wherever it may be necessary, for the authentication of this specifically marked product would raise theft alarm. The possibility that several keys in one given chip can be used, or that a number of verification serves can use one key contained in the chip, allows that the state-run authorities and institutions (e.g. customs offices, IRS, excise duty offices, etc.) may apply the authentication system and the method according to the Invention to keep an eye on original products by acquiring such information as: data referring to the manufacturer of a product; whether or not obligatory taxes or customs duties have been paid; when one batch of the products has been exported from a given customs zone, etc. Owing to the possibility to acquire additional data from the verification servers, the authorized offices, institutes can perform necessary commerce-related inspections with the use of this Invention in order to acquire additional information, independent of the authentication, for example the information on the shelf life of a product that is to be used, on the warranty repairs, service data, etc.

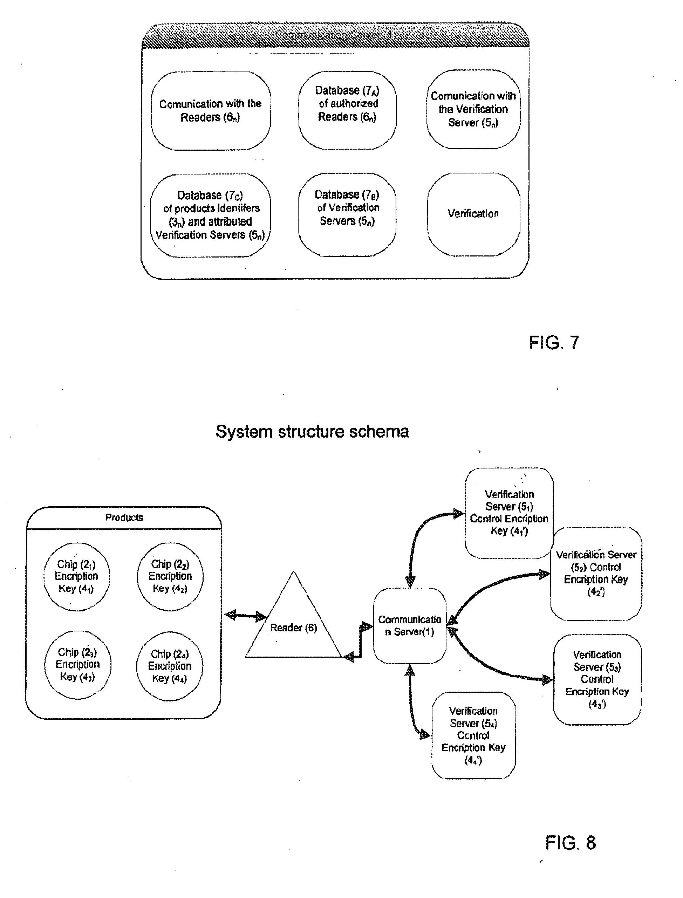

The object under this Invention is exemplified in the attached Drawings: in Fig. 1, there is a block diagram showing the product authentication system with the use of an encryption key and one verification server; in Fig. 2 an example of the functional structure of the reader is represented; in Fig. 3, the verification server's functionality features are exemplified; in Fig. 4, there is a diagram of control data encryption scheme; Fig. 5 represents a third embodiment of the Invention, where readers with different permissions are applied along with the products holding one and more encryption keys contained in the controller chip; Fig. 6 shows a diagrammatic representation of the product authentication method with the use of encryption key according to the description of the second embodiment of the Invention; Fig. 7 shows an example of the communication server functionality; Fig. 8 represents a system operational diagram using an example with one reader and many fitting, appropriate verification servers. Digital symbols appearing in the drawings shown in the Figures denote what follows: 1 - communication server; 2 - controller chip; 3 - product identifier / 3ₙ - products identifiers; 4, 4₁, 4₂, 4₃ - encryption keys; 4', 4₁', 4₂', 4₃' - control encryption keys; 5 - verification server; 5ₙ, 5₁, 5₂, 5₃ - verification servers; 6 - reader; 6₁, 6₂ - readers holding different permissions; 7 - database of authorized product identifiers and readers; 7_{A} - database of authorized readers; 7_{B} - database of verification servers; 7_{C} - database of product identifiers and their communication servers; 7_{D} - database of product identifiers and data referring to products; 7_{E}, 7_{F} - databases of product identifiers and control encryption keys assigned to them; dₖ - control data; dh₁ - resulting code; dh₂ - control code; f - hash function; d#₁ - hashed resulting code; d#₂ - hashed control code; dₚ - data referring to a product.

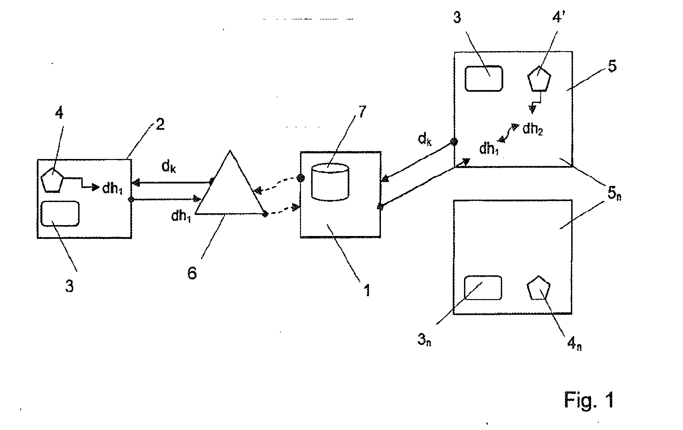

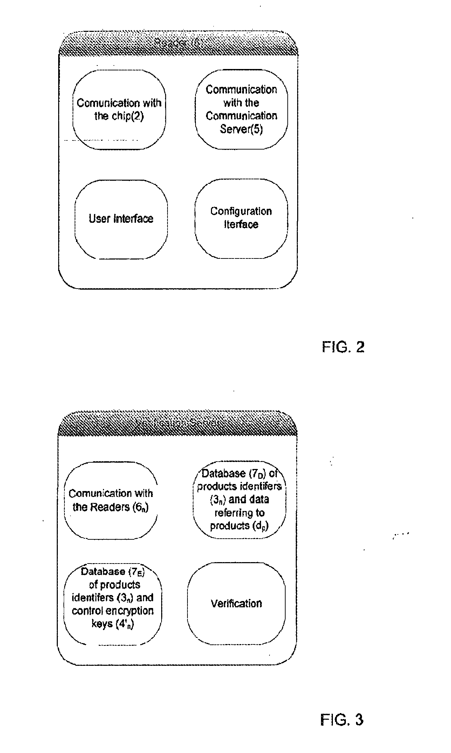

According to the first embodiment of the Invention, the encryption key-based system for authenticating products as represented in Fig. 1 consists in that a reader **6** is connected to a controller chip **2**; the controller chip **2** has a product identifier **3** encoded in it and an encryption key **4** encoded in the repository of the controller chip **2**; moreover, the reader **6** is connected, via a remote connection, to a communication server **1** and, via this communication server **1,** to a proper verification server 5 that, owing to its specific features, carries out the operations illustrated in the example in Fig. 3. The connection between the reader **6** and the controller chip **2** is a local wired connection, whereas the connection between the reader **6** and the communication server **1** is a remote connection via a computer network and this connection uses a secure VPN link; the communication server **1** is connected to the verification server **5** through a local connection via a local LAN network, and the communication server **1** identifies and chooses the proper verification server **5** that holds the control encryption key **4**' assigned to the identifier 3 of the product being authenticating. The activation of the connection to a proper verification server **5** from amongst the available verification servers **5ₙ** takes place on the communication server **1** and is based on the data of products identifers **3ₙ** and verification servers **5ₙ**; the data of products identifiers **3ₙ** are stored in the database **7.** The active connection between the controller chip **2** and the verification server **5** via the reader **6** and the communication server **1** makes it possible to exchange data referring to the product identifier **3;** based on those data, the verification server **5** generates random control data **dₖ** and sends them to the controller chip **2** via the same link channel; the controller chip **2** encrypts them using the encryption key **4** and generates a resulting code **dh₁**; at the same time, the verification server **5** encrypts the control data **dₖ** with the use of the control encryption key **4',** which was identified as a key assigned to the given product identifier **3,** and this verification server **5** generates a control code **dh₂.** The authentication is performed by sending, via the active connection, the resulting code **dh₁** from the controller chip **2** to the verification server and by comparing the resulting code **dh₁** with the control code **dh₂.** In this example of the embodiment of the Invention, the comparison result that proves the identity between the resulting code **dh₁** and the control code **dh₂** also means that the authentication result is positive. The authentication result can be read on the reader **6** using a user's interface as shown in Fig. 2.

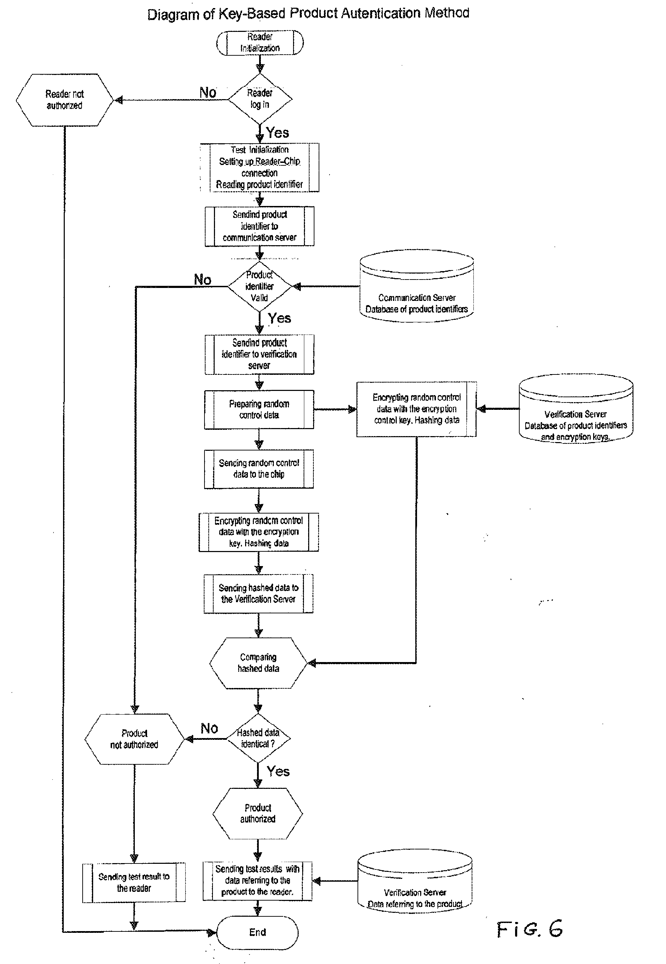

In Fig. 6, there is a diagram showing an example of the second embodiment of the Invention; it represents a method for authenticating products with the use of an encryption key. Upon activation, the reader attempts to log in into the system. An unauthorized reader cannot log in nor access the system, and the authentication process is ended. In the case the reader has logged in, it begins a test and provides a connection with the controller chip via the local connection; thereafter, the controller chip sends a given product identifier to the reader. Subsequently, the reader sends this product identifier to this communication server that contains a database of authorized product identifiers; here, the product identifier is verified. When no product identifier can be found in the database, the authentication process ends with a negative result; such result is being communicated to the reader. If not, the communication server sends the product identifier to the verification server where the random control data are prepared; next, those data are sent to the reader via the communication server and further, through the local connection provided between the reader and the controller chip, to the controller chip. At the same time, the verification server verifies the control encryption key assigned to the product identifier, encrypts those control data using the same control encryption key, and generates a control code. Then, the verification server uses a hash function for the purpose of computing the hash value of the control code; consequently, a hashed control code is obtained. Simultaneously, the control chip encrypts the control data using the encryption key and generates a resulting code; afterwards, a hash value is computed for the resulting code with the use of hash function; the computation result is a hashed resulting code. The reader reads the hashed resulting code on the controller chip and sends it to the verification server via the communication server; in the verification server, the hashed control code and the hashed resulting code are compared. If those two codes compared appear to be different/non-identical, the authentication result is negative, and this negative authentication result is sent to the reader via the connection through the communication server. However, when the two codes compared (the hashed resulting code and the hashed control code) appear identical, the authentication result is positive and confirms that the encryption key matches the paired control key; this means that the product being checked is original. In this case, the verification server reads the data referring to the product, such as: deadline of warranty provided to the product, product service history, etc. The positive authentication result and the product data are sent by the communication server via the established connection to the reader, where the information received is read using the user's interface.

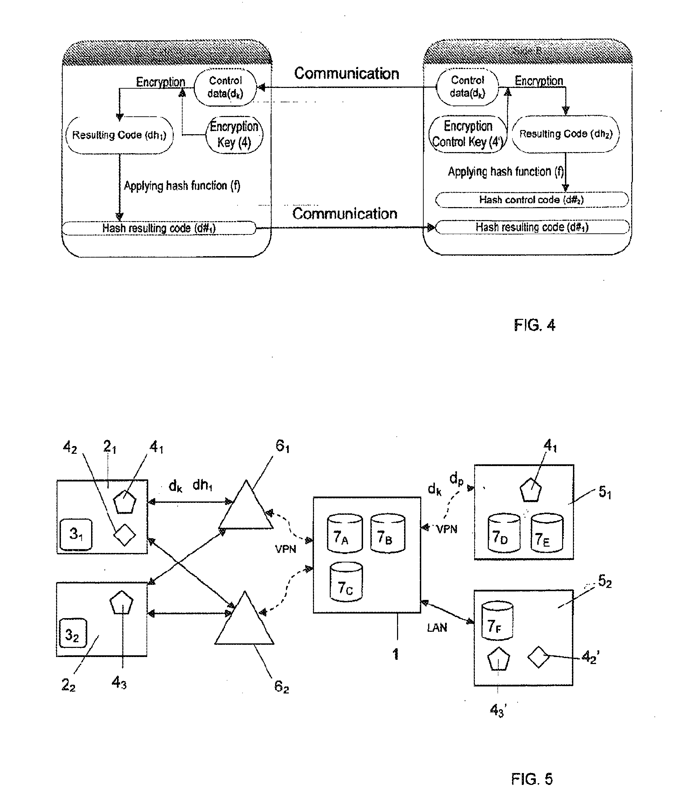

Fig. 5 represents one more preferable embodiment of the Invention. Here, the product authentication system uses several encryption keys, readers with different permissions, and a number of verification servers to transfer additional data. Reader **6₁** is a technical control reader, The reader **6₁** activates a local connection to a controller chip **2₁** of the first product; it acquires information on the product identifier **3₁** and sends an authentication request to the communication server **1** using a remote encrypted VPN protocol. Based on the data contained in the database **7_{C}**, the communication server **1** identifies the product identifier **3₁** that holds more than one encryption key and it also checks which verification servers those encryption keys are linked to. Next, based on the database contained in the permissions-containing base of the readers **7_{A}** as well as in the base of the verification servers **7_{B},** a request for authenticating the first key is addressed to the verification server **5₁** that contains a database **7_{D}** of the products identifiers and of the control encryption keys **4₁**' assigned to them. A second request for authenticating the second key is addressed to the verification server **5₂** with a database **7_{E}** of the products identifiers and of the keys **4₂'** associated with them. The verification server **5₁** sends a control information **dₖ** using the encrypted remote connection through VPN to the communication server **1**. Based on the control data **dₖ**, the controller **2₁** generates a resulting code **dh₁** using the first encryption key **4₁** and sends it via the reader **6₁** using a local connection through the communication server **1** to the verification server **5₁,** At the same time, on the basis of both the information contained in the database **7_{D}** of the products identifiers **3ₙ** and the control encryption keys assigned to them, the verification server **5₁** identifies the proper control encryption key **4₁'** and verifies it as a right key assigned to the product **3₁**; next, with the use of this right key verified, the verification server **5₁** generates a control code **dh₂** and compares it with the resulting code **dh₁**: finally, its sends the authentication result to the reader **6₁** via the communication server **1.** The authentication procedure for the key **4₂** is performed side-by-side by the verification server **5₂** in the similar way. The permissions of the reader **6_{1,}** recorded in the base of permissions for readers **7_{A}**, permit the reader **6₁** to acquire data referring to the product **dₚ**; in this example, the said data are complementary technical information (such as the information on the warranty repairs and the date of the most recent technical inspection). The data referring to the product **dₚ** and contained in the verification server **5₂**, in the database **7_{E}** of the products identifiers **3ₙ** and of the assigned to those identifiers information referring to the date of technical inspection and warranty repairs, are sent to the reader **6₁** along with the authentication result via the communication server **1**. A reader **6₂** that belongs to the owner of trademarks of the product being authenticated activates a local connection with the controller chip **2₁** of the first product, acquires information referring to the product identifier **3₁** and sends a request for authentication to the communication server **1** via the remote link encrypted by VPN protocol. Based on the data contained in the database of the products identifiers 7c, the communication server **1** identifies the product identifier **3₁** equipped with more than one encryption key. After that, based on the data contained in the base of permissions of the readers 7_{A}, the communication server **1** identifies the reader **6₂** that is not permitted to acquire any information of the technical state of product, since it only has the permission to authenticate the product in question; therefore, while utilizing the base of the verification servers **7₅**, the verification server **1** sends an authentication request to the verification server **5₁** that holds the database of product identifiers **3ₙ** and control encryption keys **7_{D}** assigned to them. The verification server **5₁** sends control information **dₖ** to the reader **6₂** using the VPN link to the communication server **1**. Based on the control data **dₖ**, the control chip **2₁** generates a resulting code **dh₁** with the use of the first encryption key **4₂** and sends it to the verification server **5₁** using the VPN link via the reader **6₂** through the communication server **1**. Based on the control key, the verification server **5₁** generates a control code **dh₂** and compares it with the resulting code **dh₁.** The verification server **5₁** conveys the authentication result to the reader **6₂** through the communication server **1.** Moreover, the communication server **1** sends information to the reader **6₂** saying that it is not authorized to test the key **4₂** owing to the lack of due permission. In the analogous way, the process of authenticating a product with a product identifier **3₂** is performed with the use of the reader **6₂**. When a product with the product identifier **3₂** is authenticated by means of the reader **6**_{**1**,} then, the reader **6₁** activates a local connection with the controller chip **2₂** of the second product. In this case, the remote VPN link and a communication server **1** are used to send a request for authentication and to exchange data. The communication server **1** identifies the permissions of the reader **6₁** on the basis of the data contained in the database **7_{A}**, and, at the same time, this communication server **1** identifies, on the basis of the data contained in the database **7_{c}** of the products identifiers, the product that has solely one encryption key **4₃**. Based on the data contained in the database **7_{B}** of the verification servers, the communication server **1** acquires information saying that as regards the product identifier **3₂**, it is possible to authenticate it only with the use of the verification server **5₃**, and that it is impossible to authenticate the product or to acquire its data with the use of the verification server **5₂**. Although the reader **6₂** has been authorized to authenticate products and receive information related to the technical state of the product from the server **5₂,** only a basic authentication of the product with the assigned product identifier **3₂** is possible with the use of the server **5₃,** and the reason thereof is that the controller **2₂** has purely and simply one encryption Key **4₃**. The communication server **1** sends a request to the verification server **53;** this server identifies the product identifier **3₂** and generates the control data **dₖ** to be transmitted to the controller chip **2₂**, where those control data are encrypted by the encryption key **4₃** contained in the repository of the controller chip **2₂.** Simultaneously, the verification server **5₃** identifies the control encryption key **4₃**' that is assigned to the product identifier **3₂**; the identification is performed on the basis of the data contained in the database **7_{F}** of the products identifiers **3ₙ** as well as on the basis of the control encryption keys assigned to those product identifiers. A resulting code **dh₁** is generated by the controller chip **2₂** and a respective control code **dh₂** is generated by the verification server **5₂**; subsequently, the verification server **5₂** compares those two codes generated; the authentication result is transmitted to the reader **6₂** via the verification server **1.**

## Claims

1. A system for authenticating products that contains a controller chip placed in a product, a reader, a verification server, and an encryption key, **wherein** the controller chip (**2**) has a product identifier (**3**) recorded therein as well as an encryption key (**4**) to generate a resulting code (**dh₁**) with the use of control information (**dₖ**) and a verification server (**5**) with a base of products identifiers (**3ₙ**) and with control encryption keys (**4'**) assigned to the products identifiers (**3ₙ**) to generate a control code (**dh₂**) with the use of control information (**dₖ**), where the verification server (**5**) is connected through a remote connection to a communication server (**1**), and the communication server (**1**) is connected via a local connection to the reader (**6**), and the reader (**6**) is connected via a local connection to the controller chip (**2**), and the authentication is performed by comparing the compatibility between two codes: the resulting code (**dh₁**) and the control code (**dh₂**).

2. The system for authenticating products according to Claim 1, **wherein** the communication server (**1**) with the base of products identifiers (**3ₙ**) and with the base of verification servers (**5ₙ**) is linked to the verification servers (**5ₙ**), and the individual products identifiers (**3ₙ**) are assigned to specific verification servers (**5ₙ**), and the activation of the connection between the communication server (1) and the appropriate corresponding verification server (**5ₙ**) depends on the product identifier (**3ₙ**).

3. The system for authenticating products according to Claim 1, and/or to Claim 2, **wherein** the product identifier (**3**) recorded in the controller chip (**2**) is a public identifier.

4. The system for authenticating products according to Claim 1, Claim 2, and/or Claim 3, **wherein** the communication server (**1**) contains a database (**7**) of the readers (**6**) and of the permissions thereof, and the readers (**6**) are granted accesses to the verification servers (**5ₙ**) as recorded in the database (**7**), whereas the communication server (**1**) is connected to many verification servers (**5ₙ**), and, depending on the permissions of the readers (**6**), a connection is initiated between the reader (**6**) and the one of those verification servers (**5ₙ**), to which the reader (**6**) has access pursuant to its permissions;

5. The system for authenticating products according to one of the Claims as indicated above, **wherein** one controller chip (**2**) has one product identifier (**3**) and more than one encryption key (**4**).

6. The system for authenticating products according to one of the Claims as indicated above, **wherein** the authentication of the product is performed by comparing the compatibility between the hashed resulting code (**d#₁**) generated with the use of the hash function (f) for the resulting code (**dh₁**) in the controller chip (**2**) and the hashed control code (**d#₂**) generated with the use of the hash function (f) for the control code (**dh₂**) on the verification server (**5**).

7. The system for authenticating products according to one of the Claims as indicated above, **wherein** the verification server (**5**) has recorded product data (**dₚ**) that contain any additional information assigned to the product identifier (**3**), and the verification server (**5**) permits the reader (**6**) to read the product data (**dₚ**) through the connection via the communication server (**1**).

8. A product authentication method that utilizes a controller chip placed in the product, a reader, a verification server, encryption keys, and remote and local connections, **wherein** the reader (**6**) provides a local connection to the controller chip (**2**) for the purpose of obtaining a product identifier (**3**), and next, the reader (**6**) establishes a remote connection to the verification system (**5**) via the communication server (**1**) and sends a request for authentication along with the product identifier (**3**) to this verification server (**5**), which, based on the product identifier (**3**), sends control information (**dₖ**) to the controller chip (**2**) using, at first, the remote connection via the communication server (**1**), and, then, the local connection via the reader (**6**); and at the same time, the verification server (**5**) encrypts, with the application of the control encryption key (**4'**) that is assigned to the given product identifier (**3**), the control information (**dₖ**) and, so, it generates a control code (**dh₂**), whereas the controller chip (**2**) encrypts, using the encryption key (**4**), this control information (**dₖ**) and, so, generates a resulting code (**dh₁**), and, thereafter, the resulting code (**dh₁**) is sent to the verification server **(5)** through, at first, the local connection to the reader **(6),** and, next, through the remote connection to the communication server **(1),** and, then, the resulting code (**dh₁**) and the control code (**dh₂**) are compared by the verification server (5) as to whether or not they are compatible/identical with each other, and the comparison result is sent by means of the verification server (**5**) through the remote connection via the communication server (**1**) to the reader (**6**), where this comparison result is interpreted.

9. The product authentication method according to Claim 8, **wherein** the utilization of the communication server (**1**) that comprises a base of products identifiers (**3ₙ**) as well as a base of verification servers (**5ₙ**) makes it possible to read, at first, from the base of products identifiers (**3ₙ**) and to identify a specific verification server (**5**) that is appropriate for the given product identifier (**3**), and the identification thereof is based on the product identifier (**3**) sent by the reader (**6**), and, next, with the help of the communication server (**1**), to send a request for authentication, received from the reader (**6**) to this appropriate verification sever (**5)**.

10. The product authentication method according to Claim 8 and/or 9, **wherein** the authentication is performed using the product identifier **(3)** that is a public identifier.

11. The product authentication method according to one of the Claims as indicated above, **wherein** the authentication is performed with the use of the reader **(6)** that is linked to one or more verification servers (**5ₙ**) by means of the communication server (**1**) and this communication server (1) can be linked, with the help of the reader (**6**), only to those verification servers (**5ₙ**), for which the given reader (**6**) has permissions and is permitted to activate a connection to them.

12. The product authentication method according to one of the Claims as indicated above, **wherein** the product authentication is performed by comparing the compatibility (absolute similarity) between the hashed resulting code (**d#₁**), generated with the application of the hash function (f) for the resulting code (**dh₁**) in the controller chip (**2**), and the hashed control code (**d#₂**), generated on the verification server (**5**) with the use of the hash function (f) for the control code (**dh₂**).

13. The product authentication method according to one of the Claims as indicated above, **wherein** the product data (**dₚ**) are sent to the reader (**6**) with the use of the verification server **(5),** via the remote connection with the communication server (**1**), and those product data (**dₚ**) on the verification server (**5**) contain any complementary information assigned to the product identifier (**3**).
